# EUROPEAN PATENT SPECIFICATION

(11) **EP 1 916 405 B1**
(45) Date of publication and mention of the grant of the patent: **26.12.2018**
(21) Application number: 07254045.3
(22) Date of filing: 11.10.2007
(51) Int. Cl.: F02K 1/00, F02K 1/12

(54) **Thrust vectorable fan variable area nozzle for a gas turbine engine fan nacelle**
Schubvektorsteuerbare Düse variablen Querschnitts für die Bypass-Gondel einer Gasturbine
Tuyère à section variable de contrôle du vecteur de poussée pour nacelle de soufflante de turboréacteur

(30) Priority: 17.10.2006 US 582219
(43) Date of publication of application: 30.04.2008
(73) Proprietor: United Technologies Corporation, Farmington, CT 06032 (US)
(72) Inventor: Winter, Michael, New Haven, Connecticut 06515 (US); Hanson, Russell B., Jupiter, FLorida 3478 (US)
(74) Representative: Dehns

(56) References cited:
- WO-A1-2008/045050
- WO-A1-2008/045062
- WO-A1-2008/045082
- US-A- 6 067 793
- US-A1- 2005 126 174
- US-A1- 2005 151 012

## Description

### BACKGROUND OF THE INVENTION

The present invention relates to a gas turbine engine, and more particularly to a turbofan gas turbine engine having a thrust vectorable variable area nozzle structure within the fan nacelle thereof.

In an aircraft turbofan engine, air is pressurized in a compressor and mixed with fuel in a combustor for generating hot combustion gases which flow downstream through turbine stages that extract energy therefrom. A high pressure turbine powers the compressor, and a low pressure turbine powers a fan disposed upstream of the low pressure compressor.

Combustion gases are discharged from the core engine through a core exhaust nozzle and fan air is discharged through an annular fan exhaust nozzle defined at least partially by a nacelle surrounding the core engine. A majority of propulsion thrust is provided by the pressurized fan air discharged through the fan exhaust nozzle, the remaining thrust provided from the combustion gases discharged through the core exhaust nozzle.

It is known in the field of aircraft gas turbine engines that optimum performance of the engine may be achieved during different flight conditions of an aircraft by tailoring the exit area for specific flight regimes such as take off, cruise maneuver, and the like. In combat aircraft, the necessity of high performance requires the expense, weight, and increased complexity of a variable area nozzle structure through which all exhaust is directed. However, such considerations have precluded the incorporation of a variable area nozzle for the fan air of a turbofan gas turbine engine propulsion system typical of commercial and military transport type aircraft.

Accordingly, it is desirable to provide an effective, relatively inexpensive variable area nozzle for a gas turbine engine fan nacelle.

Prior art gas turbine engines having fan nacelles are shown in US-2005/0126174 and US-2005/0151012.

WO-2008/045082, which is prior art under Art 54(3) EPC, also discloses a gas turbine engine fan nacelle having multiple hinged flaps that can be actuated independently and/or in groups using segments guided by tracks, in order to change the direction of thrust.

According to the present invention, there is provided a fan nacelle as claimed in claim 1.

### SUMMARY OF THE INVENTION

A thrust vectorable fan variable area nozzle (FVAN) according to one aspect of the present invention includes a synchronizing ring assembly, a static ring, and a flap assembly mounted within a fan nacelle. Segments of the flap assembly are pivotally mounted to the static ring at a hinge and linked to independently rotatable segments of the synchronizing ring assembly through a respective linkage. An actuator assembly selectively rotates each of the synchronizing ring segments relative the static ring to separately adjust the flap assembly segments.

In operation, adjustment of the entire periphery of the thrust vectorable FVAN in which all segments are moved simultaneously is utilized to maximize engine thrust and fuel economy during each flight regime. By separately adjusting certain segments of the thrust vectorable FVAN in an asymmetric manner, engine thrust is selectively vectored to provide, for example only, trim balance or thrust controlled maneuvering.

The present invention therefore provides an effective, relatively inexpensive variable area nozzle for a gas turbine engine fan nacelle.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic view an exemplary turbo fan engine embodiment for use with the present invention;
Figure 1B is a perspective partial fragmentary view of the engine;
Figure 1C is a rear view of the engine;
Figure 2A is a perspective view of a section of the thrust vectorable FVAN;
Figure 2B is a schematic plan view of the synchronizing ring assembly and the segments thereof;
Figure 2C is an exploded view of the linkage for one flap of the thrust vectorable FVAN;
Figure 2D is a schematic view of a slot within the synchronization ring of the thrust vectorable FVAN;
Figure 3A is an exploded view of one flap of the thrust vectorable FVAN;
Figure 3B is a rear view illustrating the sliding tongue and groove interface between two flaps of the flap assembly;
Figure 4A is a rear view of a section of the thrust vectorable FVAN;
Figure 4B is a side view of the flap assembly in a multiple of positions;
Figure 4C is a perspective view of the flap assembly in a multiple of positions in which each flap is shown in a different position;
Figure 5A is a schematic rear view of the thrust vectorable FVAN in an example constricted position wherein each segment has been positioned in a synchronized manner to reduce the fan exit throat area; and
Figure 5B is a schematic rear view of the thrust vectorable FVAN in an example thrust vectored position wherein the lower segments are asymmetrically positioned relative the upper segments to vector the thrust exiting the fan exit throat area in an "up" direction toward the engine flow.

### DETAILED DESCRIPTION OF THE PREFERRED EMBODIMENT

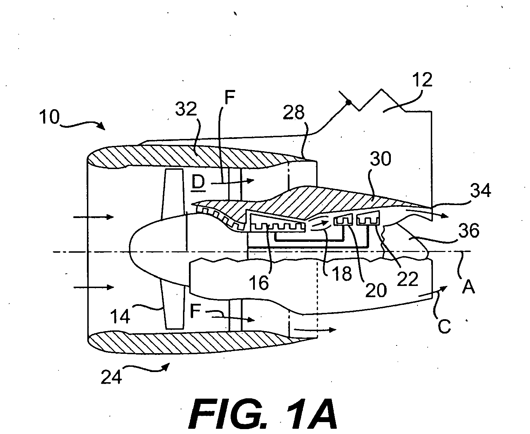

Figure 1A illustrates a general partial fragmentary view of a gas turbofan engine 10 suspended from an engine pylon 12 as typical of an aircraft designed for subsonic operation. The engine 10 is preferably a high-bypass turbofan aircraft engine. The engine 10 typically includes in serial flow communication a fan 14 with a low pressure compressor, a high pressure compressor 16, an annular combustor 18, high pressure turbine 20, and low pressure turbine 22. During operation, air is pressurized in the compressor and mixed with fuel in the combustor for generating hot combustion gases which flow through the high and low pressure turbines that extract energy therefrom. The high pressure turbine powers the compressor through a shaft therebetween, and the low pressure turbine powers the fan through another shaft therebetween.

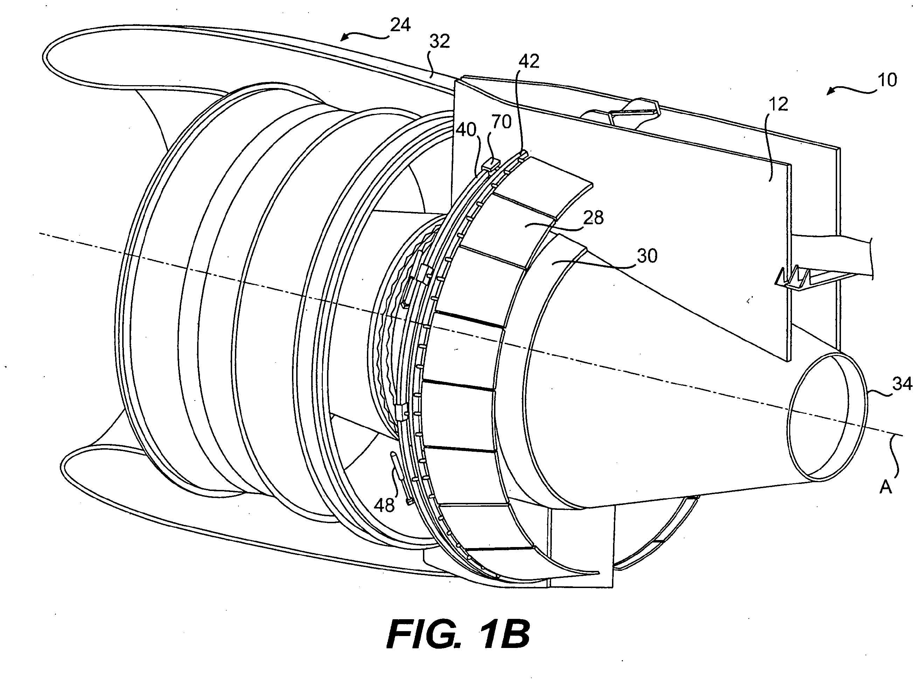

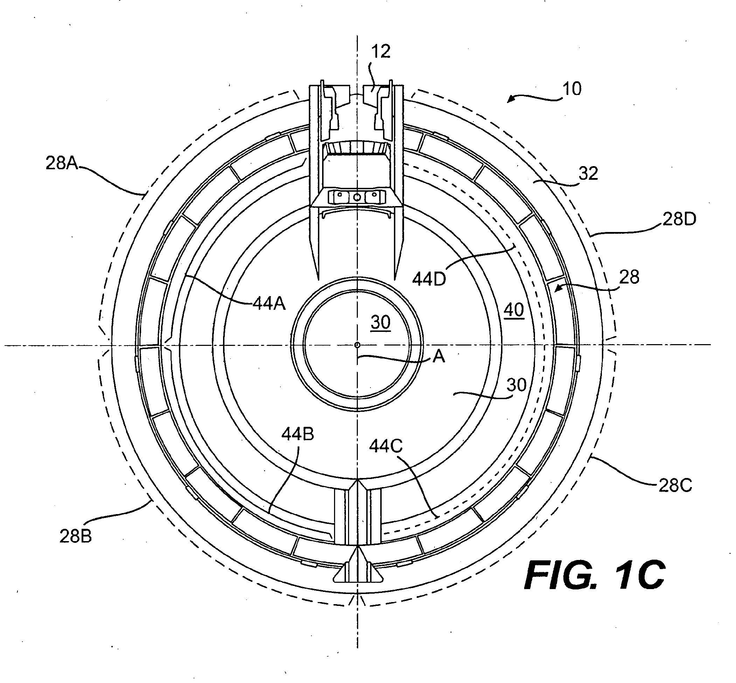

The exemplary turbofan engine 10 is in the form of a high bypass ratio engine mounted within a nacelle assembly 24 in which most of the air pressurized by the fan bypasses the core engine itself for generating propulsion thrust. The fan air F is discharged from the engine 10 through a thrust vectorable fan variable area nozzle (FVAN) 28 (also illustrated in Figures 1B and 1C) defined radially between a core nacelle 30 and a fan nacelle 32. The thrust vectorable FVAN 28 preferably includes a multiple of separately movable segments 28A-28D (four shown). It should be understood that any number of segments may be utilized.

The core exhaust gases C are discharged from the core engine through a core exhaust nozzle 34 defined between the core nacelle 30 and a center plug 36 disposed coaxially therein around an engine longitudinal centerline axis A of the engine 10 and nacelle

The thrust vectorable FVAN 28 of the fan nacelle 32 coaxially surrounds the core nacelle 30 to define a variable diameter nozzle downstream of an annular fan duct D for discharging axially the fan air F pressurized by the upstream fan 14.

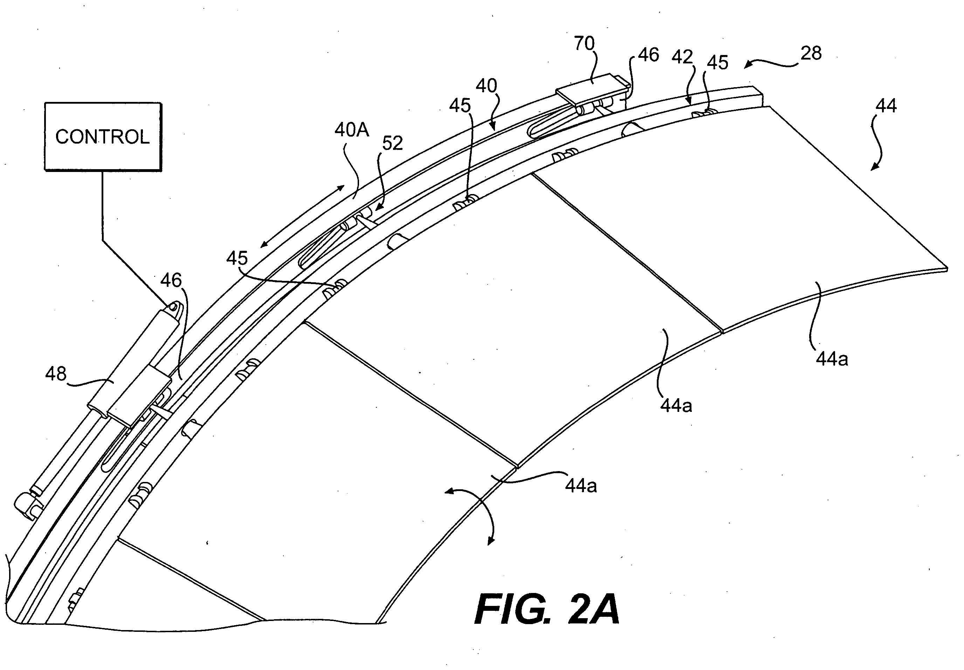

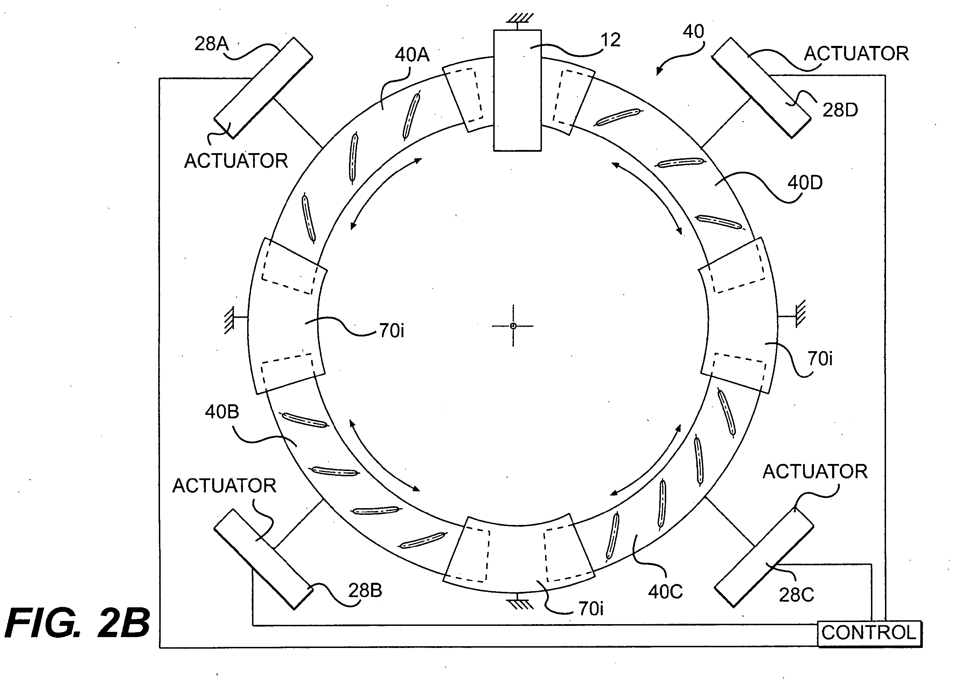

Referring to Figure 2A, a portion of the thrust vectorable FVAN 28 generally includes a synchronizing ring assembly 40, a static ring 42, and a flap assembly 44. The flap assembly 44 is pivotally mounted to the static ring 42 at a multitude of hinges 45 and linked to the synchronizing ring assembly 40 through a linkage 46. An actuator assembly 48 (only one shown) selectively rotates each segment of the FVAN 28A-28D by rotating the associated synchronizing ring segment 40A-40D (Figure 2B) relative the static ring 42 to adjust the associated flap assembly 44 through the linkage 46 to vary the area defined by the thrust vectorable FVAN 28 through which the fan air F is discharged. It should be understood that various actuation systems which asymmetrically moves each segment of the FVAN 28A-28D may also be utilized with the present invention.

Referring to Figure 2B, the synchronizing ring assembly 40 is mounted within a multitude of slider tracks 70 that are affixed within the fan nacelle 32 (Figure 1B). The synchronizer ring segments 40A-40D are each independently rotatable and each adjust an associated adjustable flap assembly segment 44A-44D (Figure 1C). That is, rotation of each synchronizer ring segment 40A-40D independently adjusts the associated adjustable flap assembly segment 44A-44D. Notably, the actuator assembly 48 includes linear actuators which rotate each segment 40A-40D of the synchronizing ring assembly 40 independently to thereby transferring relative significant force through a relatively uncomplicated, low-profile system.

Preferably, the synchronizer ring segments 40A-40D interface with adjacent segments within a synchronizing ring slider interface track 70i which permits for the independent rotation of each synchronizer ring segment 40A-40D by providing clearance therebetween. That is, each synchronizing ring slider interface track 70i are fixed members within which two adjacent synchronizer ring segments 40A-40D are slidably supported for independent movement.

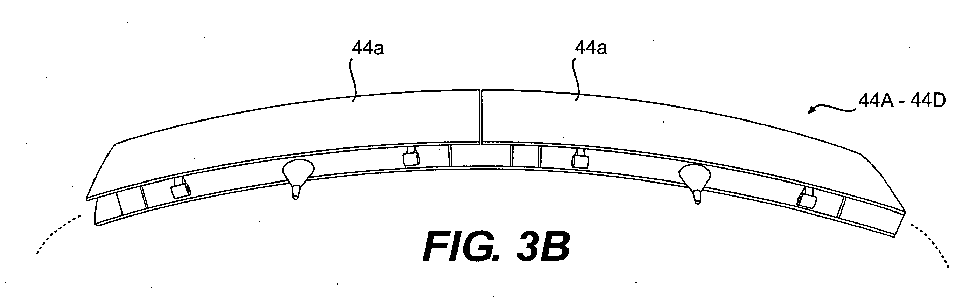

The thrust vectorable FVAN 28 is preferably separated into four segments 28A, 28B, 28C, 28D defined by the synchronizer ring segments 40A-40D and the associated adjustable flap assembly segment 44A-44D. The four segments 28A-28D are each independently adjustable. That is, at the interface between each segment 28A-28D - defined by the synchronizing ring slider interface tracks 70i - there is no nested tongue and groove arrangement such that the flaps on each side of the adjacent segments are not nested when assembled (Figure 3B). It should be understood that a flexible seal arrangement may be located between each segment 28A, 28B, 28C, 28D. It should be further understood that although four segments are illustrated, any number of segments as well as independent flap operation may alternatively or additionally be provided. One such alternative embodiment may provide only an upper and lower segment (28A and 28D are combined and 28B and 28C are combined).

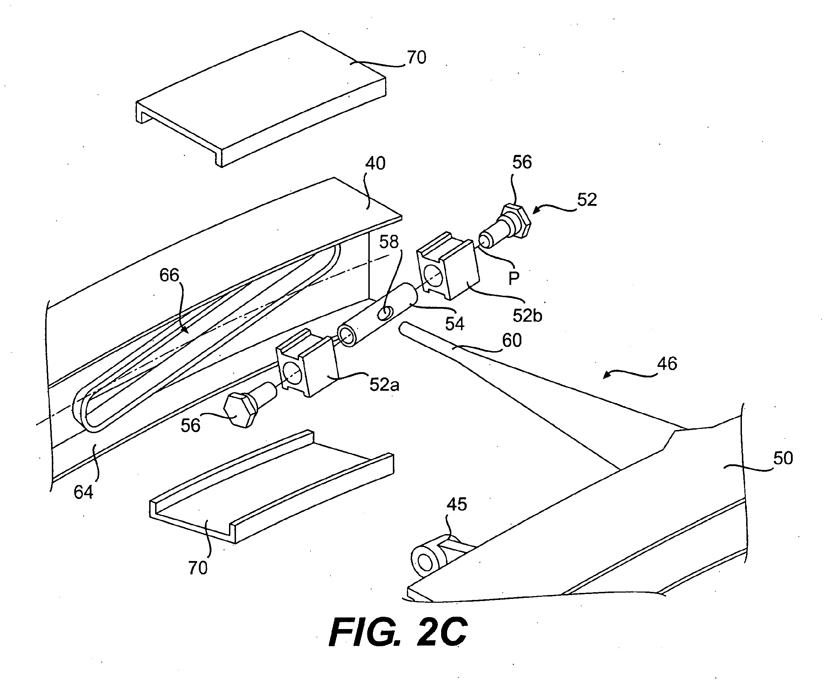

Referring to Figure 2C, the linkage 46 for each flap 44a of the flap assembly 44 generally includes a hinge beam 50, a slider block assembly 52 and a hinge pin 54 mounted to the slider block assembly 52 through a fastener 56. The slider block assembly 52 preferably includes a first slider block 52a and a second slider block 52b between which the hinge pin 54 is mounted through the fasteners 56 for rotation about the longitudinal axis P thereof. The hinge pin 54 includes an aperture 58 which receives a hinge beam rod 60.

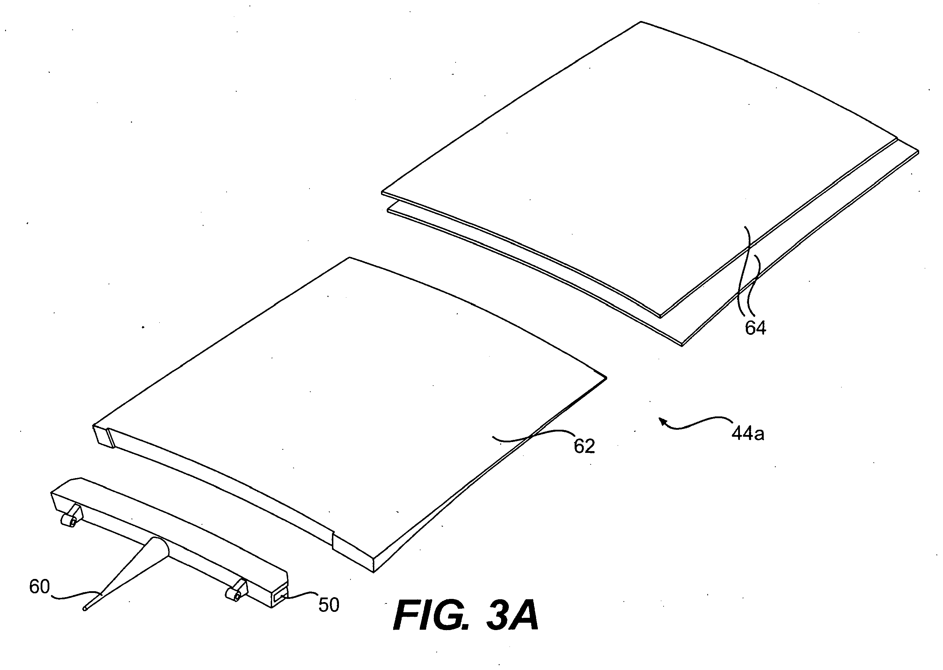

Each flap 44a preferably includes a machined aluminum honeycomb core 62 and carbon fiber skins 64 mounted to the hinge beam 50 (Figure 3A). Each flap 44a in each segment 28A-28D includes a nested tongue and groove arrangement such that the flaps 44a in each segment 28A-28D are nested when assembled (Figure 3B). That is, each flap 44a engages the adjacent flaps 44a to provide a circumferential seal which defines the exit area.

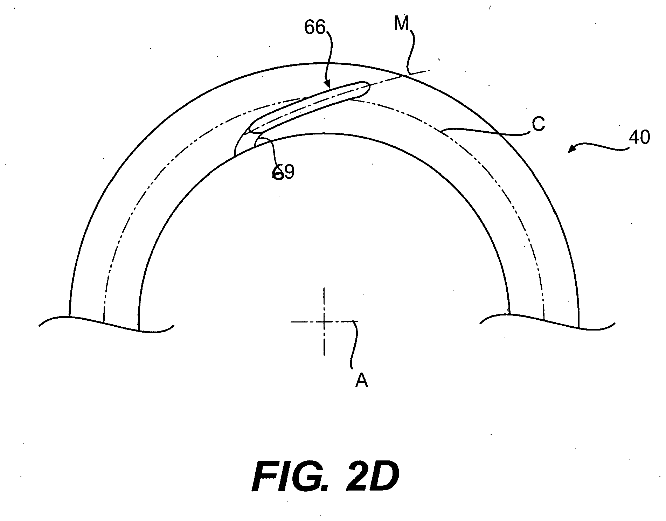

The slider blocks 52a, 52b are located within a slot 66 formed in the synchronizing ring assembly 40. The slots 66 formed within the synchronizing ring assembly 40 are non-circumferentially located about the engine longitudinal centerline axis A. That is, a mean line M defined by each slot 66 is transverse to a concentric circle S defined by the synchronizing ring assembly 40 about axis A (Figure 2D). Preferably, the slots 66 include a radial assembly opening 69 to receive the slider blocks 52a, 52b in an extended length of the slot 66 to facilitate assembly. Alternatively, the slider blocks 52a, 52b may be formed of a multitude of pieces to facilitate assembly into the slot 66 which does not include a radial assembly opening 69.

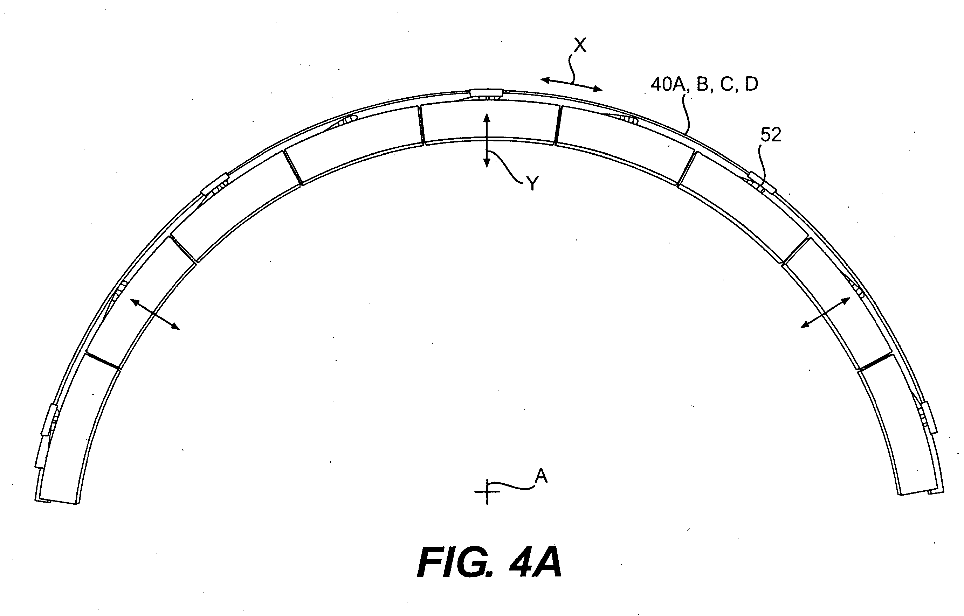

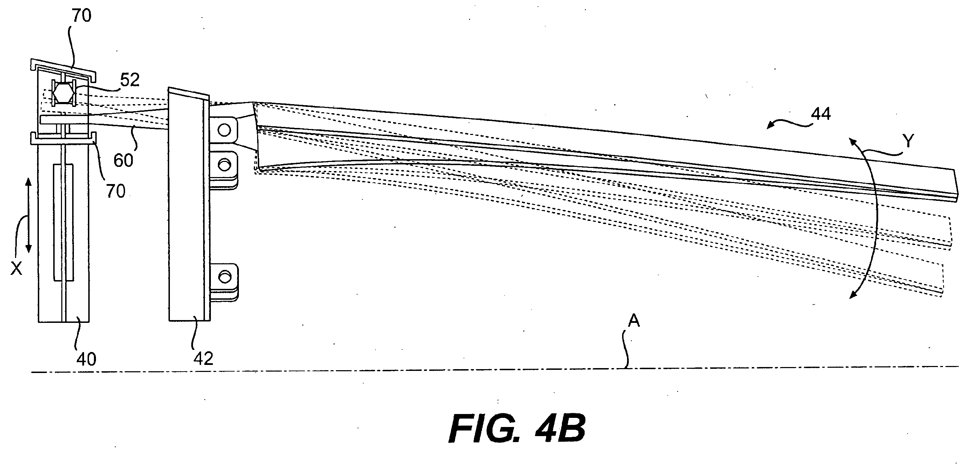

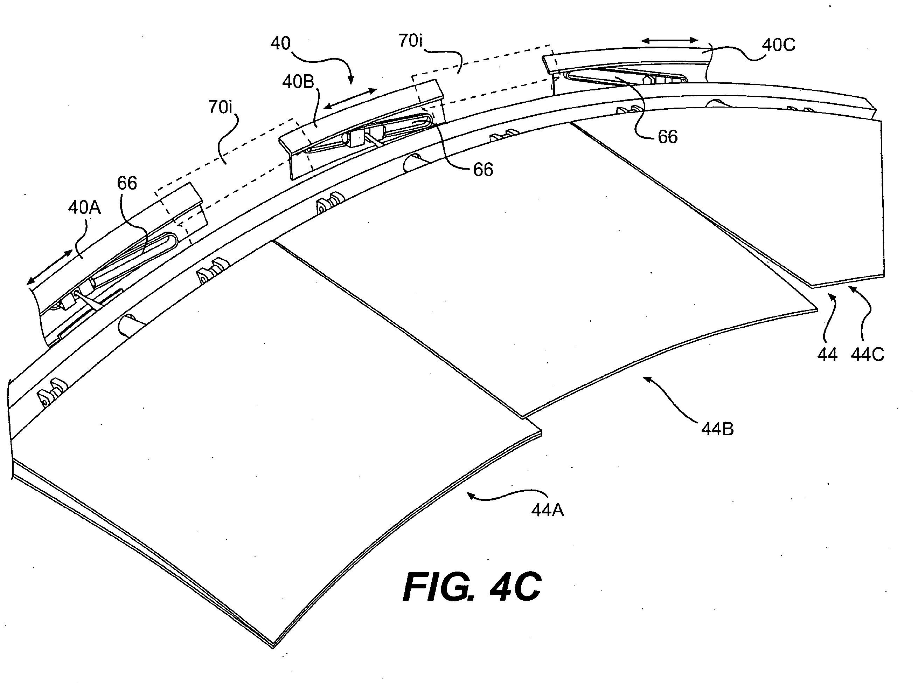

In operation, the actuator assembly 48 independently rotates the synchronizer ring segments 40A-40D of the synchronizing ring assembly 40 circumferentially about the engine longitudinal centerline axis A (double headed arrow X; Figure 4A). Within each synchronizer ring segment 40A-40D, the slider block assembly 52 moves within the slot 66 such that the hinge beam rod 60 converts radial movement to tangential movement at each flap assembly 44A-44D to vary the diameter of the associated flap assembly 44A-44D (illustrated in a multiple of exemplary positions in Figures 4B and 4C). When all the synchronizer ring segments 40A-40D of the synchronizing ring assembly 40 move in unison, the periphery of the annular fan exit area between the fan nacelle and the core nacelle (Figure 1C) is varied. When particular segments 40A-40D of the synchronizing ring assembly 40 are moved separately, the periphery of the annular fan exit area between the fan nacelle and the core nacelle (Figure 1C) provides an asymmetric fan exit area.

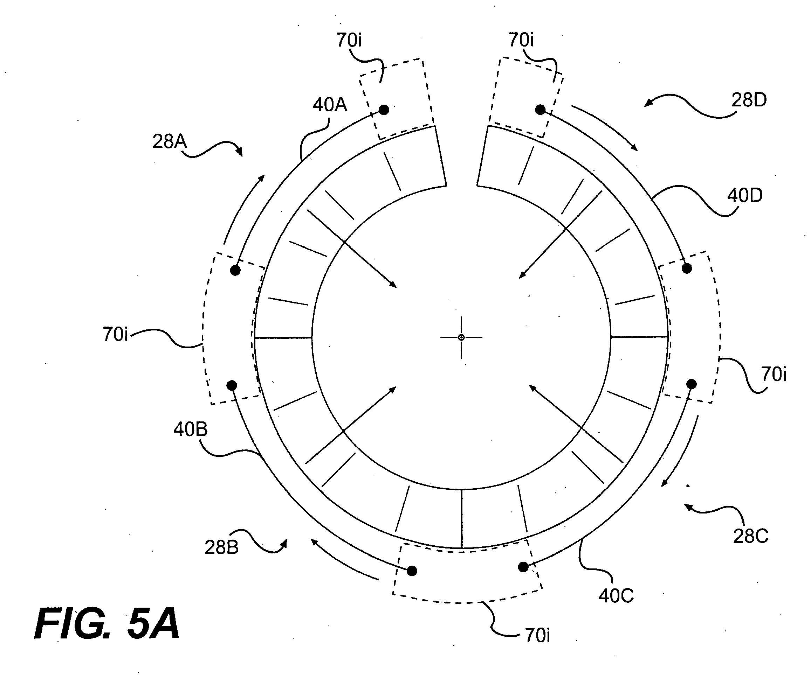

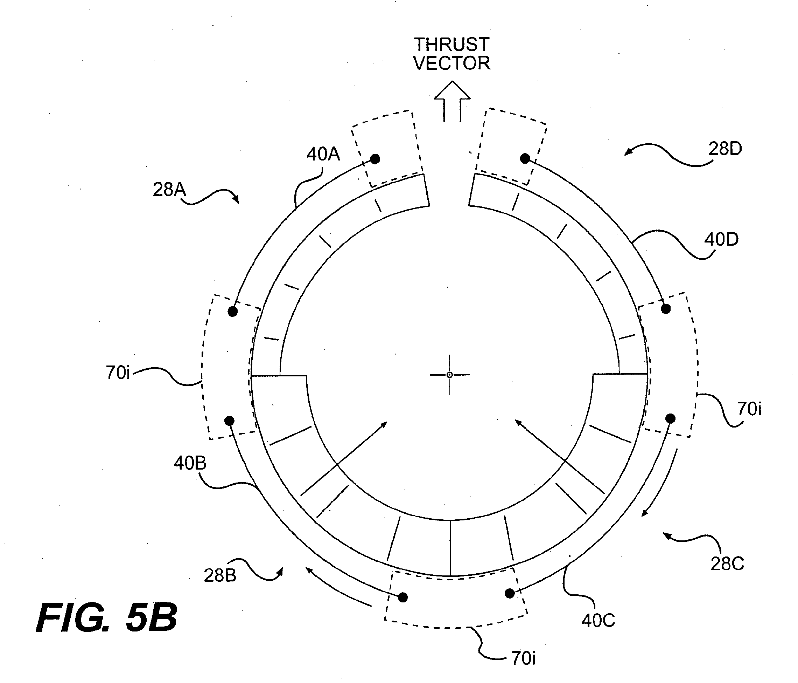

By adjusting the entire periphery of the thrust vectorable FVAN 28 in which all segments 28A-28D are moved simultaneously (Figure 5A; FVAN 28 constricted symmetrically), engine trust and fuel economy are maximized during each flight regime by varying the fan nozzle exit area. By separately adjusting the segments 28A-28D of the thrust vectorable FVAN 28 to provide an asymmetrical fan nozzle exit area (Figure 5B; only FVAN segments 28B and 28C constricted such that thrust is directionally vectored), engine trust is selectively vectored to provide, for example only, trim balance or thrust controlled maneuvering.

Preferably, each actuator 48A-48D (Figure 2) or set of actuators utilized in conjunction with each segment 28A-28D of the actuator assembly 48 communicates with an engine controller or the like to adjust the position of each segment 28A-28D of the thrust vectorable FVAN 28. However, other control systems including flight control systems may likewise be usable with the present invention to integrate the thrust vectorable FVAN 28 with an aircraft flight control system. That is, the thrust vectorable FVAN 28 is utilized as another control system integrated with the aerodynamic control surfaces.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A fan nacelle (32) for a gas turbine engine (10) comprising:
a static ring (42) defined about an axis;
a flap assembly (44) including:
a first flap assembly segment (44A) pivotally mounted to said static ring (42) to define a first semi-annular fan exit throat area segment; and
a second flap assembly segment (44B) pivotally mounted to said static ring (42) to define a second semi-annular fan exit throat area segment;
a first synchronizing ring segment (40A) rotatable about said axis relative said static ring (42);
a second synchronizing ring segment (40B) rotatable about said axis relative said static ring (42);
a first linkage (46) mounted to said first synchronizing ring (40A) and said first flap assembly segment (44A) such that said first semi-annular fan exit throat area segment is adjustable in response to rotation of said first synchronizing ring segment (40A);
a second linkage (46) mounted to said second synchronizing ring (40B) and said second flap assembly segment (44B) such that said second semi-annular fan exit throat area segment is adjustable independently of said first semi-annular fan exit throat area segment in response to rotation of said second synchronizing ring segment (40B) to selectively generate a thrust vector off said axis, wherein said flap assembly (44) includes a hinge beam rod (60) which extends through said static ring (42), and said hinge beam rod (60) engages a slider block (52) movable within each of a multitude of slots (66) defined within said first synchronizing ring segment (40A) and said second synchronizing ring segment (40B).

2. The fan nacelle as recited in claim 1, wherein said first flap assembly segment (44A) and said second flap assembly segment (44B) each includes a multitude of flaps (44) nested together in a tongue and groove arrangement.

3. The fan nacelle as recited in claim 1 or 2, wherein said first semi-annular fan exit throat area segment and said second semi-annular fan exit throat area segment define upper and lower segments of an annular fan exit area.

4. The fan nacelle as recited in any preceding claim, wherein each of said slots (66) defines a mean line transverse to a concentric circle defined by said first and second synchronizing ring segments (40A, 40B) about said axis.

5. The fan nacelle as recited in claim 4, wherein said first synchronizing ring segment (40A) and said second synchronizing ring segment (40B) are defined on said concentric circle.

6. The fan nacelle as recited in claim 5, wherein said first synchronizing ring segment (40A) and said second synchronizing ring segment (40B) are concentric.

7. The fan nacelle as recited in any preceding claim, further comprising a linear actuator (48) which separately rotates each of said first synchronizing ring segment (40A) and said second synchronizing ring segment (40B).

8. The fan nacelle as recited in any preceding claim, including a plurality of slider tracks (70) fixed within the fan nacelle (32) and circumferentially spaced apart from each other about the axis, and wherein opposed ends of the first and second synchronizing ring segments (40A, 40B) are received within one slider track (70i).

9. The fan nacelle as recited in any of claims 1 to 7, including a plurality of slider tracks (70) fixed within the fan nacelle (32) and circumferentially spaced apart from each other about the axis, and wherein each slider track (70i) slidably supports two adjacent synchronizing ring segments (40A, 40B) for independent movement.

10. The fan nacelle as recited in claim 9, including a third flap assembly segment (44C) pivotally mounted to said static ring (42) to define a third portion of said fan exit throat area, a fourth flap assembly segment (44D) pivotally mounted to said static ring (42) to define a fourth portion of said fan exit throat area, a third synchronizing ring segment (40C) rotatable about said axis relative said static ring (42), a fourth synchronizing ring segment (40D) rotatable about said axis relative said static ring (42), a third linkage (46) mounted to said third synchronizing ring (40C) and said third flap assembly segment (44C) such that said third portion of said fan exit throat area is adjustable in response to rotation of said third synchronizing ring segment (40C), and a fourth linkage (46) mounted to said fourth synchronizing ring (40D) and said fourth flap assembly segment (44D) such that said fourth portion of said fan exit throat area is adjustable independently of said third portion of said fan exit throat area in response to rotation of said fourth synchronizing ring segment (40D) to selectively generate a thrust vector off said axis.

11. The fan nacelle as recited in claim 1, wherein each of the first and second linkages (46) includes first and second slider blocks (52a, 52b) located within a slot (66) formed in the respective synchronizing ring segment (40A, 40B), and a hinge pin (54) mounted between the first and second slider blocks (52a, 52b), and wherein the hinge pin (54) includes an aperture (58) that receives a hinge beam rod (60) associated with a flap of a respective one of the first and second flap assembly segments (44A, 44B).

12. The fan nacelle as recited in claim 11, wherein each of the first and second linkages (46) includes a hinge beam (50) for each flap, the hinge beam rod (60) extending outwardly from the hinge beam (50) to be received within the aperture (58) of the hinge pin (54), and wherein the hinge beam (50) includes hinges positioned on opposing sides of the hinge beam rod (60).

## Patentansprüche

1. Bypass-Gondel (32) für eine Gasturbine (10), die Folgendes umfasst:
einen statischen Ring (42), der um eine Achse definiert ist;
eine Klappenanordnung (44), die Folgendes einschließt:
ein erstes Klappenanordnungssegment (44A), das schwenkbar an dem statischen Ring (42) befestigt ist, um ein erstes halbringförmiges Lüfteraustrittsdrosselbereichssegment zu definierten,
ein zweites Klappenanordnungssegment (44B), das schwenkbar an dem statischen Ring (42) befestigt ist, um ein zweites halbringförmiges Lüfteraustrittsdrosselbereichssegment zu definieren,
ein erstes Synchronisierungsringsegment (40A), das relativ zu dem statischen Ring (42) um die Achse drehbar ist;
ein zweites Synchronisierungsringsegment (40B), das relativ zu dem statischen Ring (42) um die Achse drehbar ist;
eine erste Verbindung (46), die an dem ersten Synchronisierungsring (40A) und dem ersten Klappenanordnungssegment (44A) befestigt ist, sodass das erste halbringförmige Lüfteraustrittsdrosselbereichssegment als Reaktion auf eine Rotation des ersten Synchronisierungsringsegments (40A) anpassbar ist;
eine zweite Verbindung (46), die an dem zweiten Synchronisierungsring (40B) und dem zweiten Klappenanordnungssegment (44B) befestigt ist, sodass das zweite halbringförmige Lüfteraustrittsdrosselbereichssegment unabhängig von dem ersten halbringförmigen Lüfteraustrittsdrosselbereichssegment als Reaktion auf eine Rotation des zweiten Synchronisierungsringsegments (40B) anpassbar ist, um selektiv einen Schubvektor außerhalb der Achse zu erzeugen, wobei die Klappenanordnung (44) eine Scharnierträgerstange (60) einschließt, die sich durch den statischen Ring (42) erstreckt, und wobei die Scharnierträgerstange (60) einen Gleitblock (52) in Eingriff nimmt, der innerhalb von jedem einer Vielzahl von Schlitzen (66) beweglich ist, die innerhalb des ersten Synchronisierungsringsegments (40A) und des zweiten Synchronisierungsringsegments (40B) definiert sind.

2. Bypass-Gondel nach Anspruch 1, wobei das erste Klappenanordnungssegment (44A) und das zweite Klappenanordnungssegment (44B) je eine Mehrzahl von Klappen (44) einschließen, die miteinander in einer Feder-und-Nut-Anordnung verschachtelt sind.

3. Bypass-Gondel nach Anspruch 1 oder 2, wobei das erste halbringförmige Lüfteraustrittsdrosselbereichssegment und das zweite halbringförmige Lüfteraustrittsdrosselbereichssegment obere und untere Segmente eines ringförmigen Lüfteraustrittsbereichs definieren.

4. Bypass-Gondel nach einem der vorhergehenden Ansprüche, wobei jeder der Schlitze (66) eine Mittellinie definiert, die quer zu einem konzentrischen Kreis verläuft, der durch das erste und das zweite Synchronisierungsringsegment (40A, 40B) um die Achse definiert ist.

5. Bypass-Gondel nach Anspruch 4, wobei das erste Synchronisierungsringsegment (40A) und das zweite Synchronisierungsringsegment (40B) auf dem konzentrischen Kreis definiert sind.

6. Bypass-Gondel nach Anspruch 5, wobei das erste Synchronisierungsringsegment (40A) und das zweite Synchronisierungsringsegment (40B) konzentrisch sind.

7. Bypass-Gondel nach einem der vorhergehenden Ansprüche, ferner umfassend einen linearen Aktuator (48), der jeweils das erste Synchronisierungsringsegment (40A) und das zweite Synchronisierungsringsegment (40B) separat dreht.

8. Bypass-Gondel nach einem der vorhergehenden Ansprüche, die eine Vielzahl von Gleitbahnen (70) einschließt, die innerhalb der Bypass-Gondel (32) fixiert und umlaufend um die Achse voneinander beabstandet sind, und wobei gegenüberliegende Enden des ersten und des zweiten Synchronisierungsringsegments (40A, 40B) innerhalb einer Gleitbahn (70i) aufgenommen werden.

9. Bypass-Gondel nach einem der Ansprüche 1 bis 7, die eine Vielzahl von Gleitbahnen (70) einschließt, die innerhalb der Bypass-Gondel (32) fixiert und umlaufend um die Achse voneinander beabstandet sind, und wobei jede Gleitbahn (70i) zwei benachbarte Synchronisierungsringsegmente (40A, 40B) gleitend für eine unabhängige Bewegung stützt.

10. Bypass-Gondel nach Anspruch 9, die ein drittes Klappenanordnungssegment (44C), das schwenkbar an dem statischen Ring (42) befestigt ist, um einen dritten Abschnitt eines Lüfteraustrittsdrosselbereichs zu definieren, ein viertes Klappenanordnungssegment (44D), das schwenkbar an dem statischen Ring (42) befestigt ist, um einen vierten Abschnitt des Lüfteraustrittsdrosselbereichs zu definieren, ein drittes Synchronisierungsringsegment (40C), das relativ zu dem statischen Ring (42) um die Achse drehbar ist, ein viertes Synchronisierungsringsegment (40D), das relativ zum dem statischen Ring (42) um die Achse drehbar ist, eine dritte Verbindung (46), die an dem dritten Synchronisierungsringsegment (40C) und dem dritten Klappenanordnungssegment (44C) befestigt ist, sodass der dritte Abschnitt des Lüfteraustrittsdrosselbereichs als Reaktion auf eine Rotation des dritten Synchronisierungsringsegments (40C) anpassbar ist, und eine vierte Verbindung (46) einschließt, die an dem vierten Synchronisierungsring (40D) und dem vierten Klappenanordnungssegment (44D) befestigt ist, sodass der vierte Abschnitt des Lüfteraustrittsdrosselbereichs unabhängig von dem dritten Abschnitt des Lüfteraustrittsdrosselbereichs als Reaktion auf eine Rotation des vierten Synchronisierungsringsegments (40D) anpassbar ist, um selektiv einen Schubvektor außerhalb der Achse zu erzeugen.

11. Bypass-Gondel nach Anspruch 1, wobei die erste und die zweite Verbindung (46) jeweils einen ersten und einen zweiten Gleitblock (52a, 52b), die sich innerhalb eines Schlitzes (66) befinden, der in dem entsprechenden Synchronisierungsringsegment (40A, 40B) ausgebildet ist, und einen Scharnierstift (54) einschließen, der zwischen dem ersten und dem zweiten Gleitblock (52a, 52b) befestigt ist, und wobei der Scharnierstift (54) eine Öffnung (58) einschließt, die eine Scharnierträgerstange (60) aufnimmt, die mit einer Klappe des entsprechenden von dem ersten und dem zweiten Klappenanordnungssegment (44A, 44B) assoziiert ist.

12. Bypass-Gondel nach Anspruch 11, wobei die erste und die zweite Verbindung (46) jeweils einen Scharnierträger (50) für jede Klappe einschließt, wobei die Scharnierträgerstange (60) sich von dem Scharnierträger (50) nach außen erstreckt, um innerhalb der Öffnung (58) des Scharnierstifts (54) aufgenommen zu werden, und wobei der Scharnierträger (50) Scharniere einschließt, die auf gegenüberliegenden Seiten der Scharnierträgerstange (60) positioniert sind.

## Revendications

1. Nacelle de soufflante (32) pour turboréacteur (10) comprenant :
une bague statique (42) définie autour d'un axe ;
un ensemble volet (44) comprenant
un premier segment d'ensemble volet (44A) monté de manière pivotante sur ladite bague statique (42) pour définir un premier segment de zone d'étranglement de sortie de soufflante semi-annulaire et
un deuxième segment d'ensemble volet (44B) monté de manière pivotante sur ladite bague statique (42) pour définir un second segment de zone d'étranglement de sortie de soufflante semi-annulaire ;
un premier segment de bague de synchronisation (40A) rotatif autour dudit axe par rapport à ladite bague statique (42) ;
un deuxième segment de bague de synchronisation (40B) rotatif autour dudit axe par rapport à ladite bague statique (42) ;
une première articulation (46) montée sur ladite première bague de synchronisation (40A) et ledit premier segment d'ensemble volet (44A) de telle sorte que ledit premier segment de zone d'étranglement de sortie de soufflante semi-annulaire soit ajustable en réponse à la rotation dudit premier segment de bague de synchronisation (40A) ;
une deuxième articulation (46) montée sur ladite deuxième bague de synchronisation (40B) et ledit deuxième segment d'ensemble volet (44B) de telle sorte que ledit second segment de zone d'étranglement de sortie de soufflante semi-annulaire soit ajustable indépendamment dudit premier segment de zone d'étranglement de sortie de soufflante semi-annulaire en réponse à la rotation dudit deuxième segment de bague de synchronisation (40B) afin de générer sélectivement un vecteur de poussée hors dudit axe, dans laquelle ledit ensemble volet (44) comprend une tige de chapiteau (60) qui s'étend à travers ladite bague statique (42), et dans laquelle ladite tige de chapiteau (60) vient en prise avec un bloc coulissant (52) mobile dans chacune d'une multitude de fentes (66) définies à l'intérieur dudit premier segment de bague de synchronisation (40A) et dudit deuxième segment de bague de synchronisation (40B) .

2. Nacelle de soufflante selon la revendication 1, dans laquelle ledit premier segment d'ensemble volet (44A) et ledit deuxième segment d'ensemble volet (44B) comprennent chacun une multitude de volets (44) emboîtés ensemble selon un agencement à languette et rainure.

3. Nacelle de soufflante selon la revendication 1 ou 2, dans laquelle ledit premier segment de zone d'étranglement de sortie de soufflante semi-annulaire et ledit second segment de zone d'étranglement de sortie de soufflante semi-annulaire définissent des segments supérieur et inférieur d'une zone de sortie de soufflante annulaire.

4. Nacelle de soufflante selon l'une quelconque des revendications précédentes, dans laquelle chacune desdites fentes (66) définit une ligne médiane transversale à un cercle concentrique défini par lesdits premier et deuxième segments de bague de synchronisation (40A, 40B) autour dudit axe.

5. Nacelle de soufflante selon la revendication 4, dans laquelle ledit premier segment de bague de synchronisation (40A) et ledit deuxième segment de bague de synchronisation (40B) sont définis sur ledit cercle concentrique.

6. Nacelle de soufflante selon la revendication 5, dans laquelle ledit premier segment de bague de synchronisation (40A) et ledit deuxième segment de bague de synchronisation (40B) sont concentriques.

7. Nacelle de soufflante selon l'une quelconque des revendications précédentes, comprenant en outre un actionneur linéaire (48) qui fait tourner séparément chacun dudit premier segment de bague de synchronisation (40A) et dudit deuxième segment de bague de synchronisation (40B).

8. Nacelle de soufflante selon l'une quelconque des revendications précédentes, comprenant une pluralité de glissières (70) fixées à l'intérieur de la nacelle de soufflante (32) et espacées circonférentiellement les unes des autres autour de l'axe, et dans laquelle les extrémités opposées des premier et deuxième segments de bague de synchronisation (40A, 40B) sont reçues à l'intérieur d'une glissière (70i).

9. Nacelle de soufflante selon l'une quelconque des revendications 1 à 7, comprenant une pluralité de glissières (70) fixées à l'intérieur de la nacelle de soufflante (32) et espacées circonférentiellement les unes des autres autour de l'axe, et dans laquelle chaque glissière (70i) soutient de manière coulissante deux segments de bague de synchronisation (40A, 40B) adjacents pour un déplacement indépendant.

10. Nacelle de soufflante selon la revendication 9, comprenant un troisième segment d'ensemble volet (44C) monté de manière pivotante sur ladite bague statique (42) pour définir une troisième partie de ladite zone d'étranglement de sortie de soufflante, un quatrième segment d'ensemble volet (44D) monté de manière pivotante sur ladite bague statique (42) pour définir une quatrième partie de ladite zone d'étranglement de sortie de soufflante, un troisième segment de bague de synchronisation (40C) rotatif autour dudit axe par rapport à ladite bague statique (42), un quatrième segment de bague de synchronisation (40D) rotatif autour dudit axe par rapport à ladite bague statique (42), une troisième articulation (46) montée sur ladite troisième bague de synchronisation (40C) et ledit troisième segment d'ensemble volet (44C) de telle sorte que ladite troisième partie de ladite zone d'étranglement de sortie de soufflante soit ajustable en réponse à la rotation dudit troisième segment de bague de synchronisation (40C), et une quatrième articulation (46) montée sur ladite quatrième bague de synchronisation (40D) et ledit quatrième segment d'ensemble volet (44D) de telle sorte que ladite quatrième partie de ladite zone d'étranglement de sortie de soufflante soit ajustable indépendamment de ladite troisième partie de ladite zone d'étranglement de sortie de soufflante en réponse à la rotation dudit quatrième segment de bague de synchronisation (40D) pour générer sélectivement un vecteur de poussée hors dudit axe.

11. Nacelle de soufflante selon la revendication 1, dans laquelle chacune des première et deuxième articulations (46) comprend des premier et second blocs coulissants (52a, 52b) situés dans une fente (66) formée dans le segment de bague de synchronisation (40A, 40B) respectif et un axe de charnière (54) monté entre les premier et second blocs coulissants (52a, 52b) et dans laquelle l'axe de charnière (54) comprend une ouverture (58) qui reçoit une tige de chapiteau (60) associée à un volet d'un segment respectif parmi les premier et deuxième segments d'ensemble volet (44A, 44B).

12. Nacelle de soufflante selon la revendication 11, dans laquelle chacune des première et deuxième articulations (46) comprend un chapiteau (50) pour chaque volet, la tige de chapiteau (60) s'étendant vers l'extérieur à partir du chapiteau (50) pour être reçue dans l'ouverture (58) de l'axe de charnière (54), et dans laquelle le chapiteau (50) comprend des charnières positionnées sur des côtés opposés de la tige de chapiteau (60).
